(19) Europäisches Patentamt
European Patent Office
Office européen des brevets

(11) Publication number: **0 417 995 A2**

(12) **EUROPEAN PATENT APPLICATION**

(21) Application number: **90309828.3**

(22) Date of filing: **07.09.90**

(51) Int. Cl.[5]: **C08F 4/655**, C08F 4/657, C08F 10/00

(30) Priority: **12.09.89 JP 236420/89**

(43) Date of publication of application: **20.03.91 Bulletin 91/12**

(84) Designated Contracting States: **DE FR GB NL**

(71) Applicant: **MITSUBISHI PETROCHEMICAL COMPANY LIMITED**
**2-5, Marunouchi 2-chome**
**Chiyoda-ku Tokyo-To(JP)**

(72) Inventor: **Fujita, Takashi, c/o Mitsubishi Petrochemical Company Ltd., Yokkaichi Sogo Kenkyusho**
**1 Toho-Cho, Yokkaichi-Shi, Mie-Ken(JP)**

(74) Representative: **Kyle, Diana et al**
**ELKINGTON AND FIFE Beacon House 113 Kingsway**
**London WC2B 6PP(GB)**

(54) **Production of olefin polymers.**

(57) Ziegler polymerization of α-olefins is disclosed which is characterized by a solid catalyst component and an organoaluminum component used in the Ziegler catalyst, and also by the temperature used which is 150 to 300 °C. The solid catalyst component, Component (A), comprises Sub-component (i) which is a solid catalyst component for Ziegler catalysts comprising Ti, Mg and a halogen; Sub-component (ii) which is a silicon compound represented by a formula

$R^1{}_mX_nSi(OR^2)_{4-n-m}$

wherein $R^1$ indicates a hydrocarbyl group, $R^2$ which may be the same as or different from $R^1$ indicates a hydrocarbyl group, X is a halogen atom, and m and n are each a number satisfying equations $0 \leqq m \leqq 3$, $0 \leqq n \leqq 3$ and $0 \leqq m+n \leqq 3$; and Sub-component (iii) which is an organometal compound of a metal of Groups I to IV of the Periodic Table. The organoaluminum component (B) is an aluminoxane.

EP 0 417 995 A2

# PRODUCTION OF OLEFIN POLYMERS

## BACKGROUND OF THE INVENTION

### Field of the Art

The present invention relates to Ziegler polymerization of olefins. More particularly, the present invention is concerned with Ziegler polymerization of olefin, or $\alpha$-olefins of at least 3 carbon atoms, in particular, characterized by, among others, the solid catalyst components comprising a transition metal in Ziegler catalysts and the polymerization temperature used which is no lower than 150°C.

Use of the solid catalyst component in accordance with the present invention in Ziegler catalysts as the transition metal component at the temperature will make it possible to produce polymers endowed with improved stereoregularity.

### Background of the invention

The catalysts heretofore proposed for the polymerization of olefins comprising a solid catalyst component containing titanium, magnesium and a halogen as the essential ingredients and an organoaluminum (and an electron donor, if desired) have produced highly stereoregular polymers.

Such prior art catalysts are such that their catalyst activity may often be found at a polymerization temperature of 90°C or lower, preferably 80°C or lower.

It has been known in the art that ethylene polymerizes at such a higher temperature as 150 to 250°C similarly at a temperature of 70 to 90°C and that polymerization of ethylene at such a higher temperature is known to have such preferable characteristics that the polyethylenes produced have a narrower molecular weight distribution or copolymerizability of ethylene with another monomer is improved.

It has also been known in the art that propylene will not produce polymers endowed with acceptably high stereoregularity when it is polymerized at such a high temperature as 150°C or higher. One possible reason therefor may be such that the solid structure comprising the titanium component capable of polymerizing propylene into polymers of high stereoregularity is destroyed at a temperature no lower than 150°C, the titanium component is aggromerated or excessively reduced by the organoaluminum component as a co-catalyst, or, when an electron donor is used during polymerization as what is called "outside electron donor", it reacts so strongly with the titanium component or with the organoaluminum component at such a higher temperature that the catalyst activity is thus lowered.

Catalysts which are capable of producing highly stereoregular polymers at such a high temperature as no lower than 150°C have, to the best of the present inventors, not been proposed.

## SUMMARY OF THE INVENTION

The present invention is based on the discovery that the above problems can be solved by use of a specified solid catalyst component in Ziegler catalysts.

More particularly, the present invention presents a process for producing $\alpha$-olefin polymers which comprises contacting at a temperature of 150°C to 300°C an olefin with a catalyst thereby to polymerize the olefin, the catalyst comprising:

Component (A) which is a solid catalyst component for Ziegler catalysts, which solid catalyst component is obtained by contacting the following Sub-components (i) to (iii):

Sub-component (i) which is a solid catalyst component for Ziegler catalysts comprising titanium, magnesium and a halogen as the essential components;

Sub-component (ii) which is a silicon compound represented by a formula

$R^1{}_mX_nSi(OR^2)_{4-m-n}$

wherein $R^1$ indicates a hydrocarbyl group, $R^2$ which may be the same as or different from $R^1$ indicates a hydrocarbyl group, X indicates a halogen atom, and m and n are each numbers satisfying equations $0 \leqq m \leqq 3$, $0 \leqq n \leqq 3$ and $0 \leqq (m+n) \leqq 3$; and

Sub-component (iii) which is an organometal compound of a metal of the Groups I to III of the Periodic Table; and

Component (B) which is an aluminoxane.

It has now been possible in accordance with the present invention that highly stereoregular olefin polymers are produced at a temperature of 150 °C or higher where it has not been possible to prepare such polymers in yield of a level comparable to that obtained by polymerization at a lower temperature of 80 °C or lower using known Ziegler catalysts.

The polymer produced by the present invention is characterized by the fact that they have broader molecular weight distribution than those produced at a lower polymerization temperature of 80 °C or lower.

## DETAILED DESCRIPTION OF THE INVENTION

### [I] Catalyst

The catalyst of the present invention comprises a combination of specific components (A) and (B). Here, the wording "comprises" does not mean that the components are limited only to those mentioned (namely, A and B), and does not exclude co-presence of other components compatible with or suited for the purpose, such as an outside electron donor which is not essential but can be used if desired.

### Component (A)

The Component (A) of the catalyst of the present invention is a solid catalyst component for Ziegler catalysts obtained by contacting the Sub-components (i) to (iii) shown below. Here, the wording "obtained by contacting" does not mean that the components are limited only to those mentioned, namely (i) to (iii), and does not exclude co-presence of other components suited for the purpose.

#### Sub-component (i)

Sub-component (i) is a solid oomponent comprising titanium, magnesium and a halogen as the essential components. Here, the wording "comprising as the essential components" indicates that it can also contain other elements suited for the purpose than the three components mentioned, that these elements can exist in any desired compound suited for the purpose respectively, and also that these elements can also exist in the form mutually bonded together. Sclid components containing titanium, magnesium and halogen are known *per se*. For example, those as disclosed in Japanese Laid-open Patent Publications Nos. 45688/1978, 3894/1979, 31092/1979, 39483/1979, 94591/1979, 118484/1979, 131589/1979, 75411/1980, 90510/1980, 90511/1980, 127405/1980, 147507/1980, 155003/1980, 18609/1981, 70005/1981, 72001/1981, 86905/1981, 90807/1981, 155206/1981, 3803/1982, 34103/1982, 92007/1982, 121003/1982, 5309/1983, 5310/1983, 5311/1983, 8706/1983, 27732/1983, 32604/1983, 32605/1983, 67703/1983, 117206/1983, 127708/1983, 183708/1983, 183709/1983, 149905/1984 and 149906/1984 may be employed.

As the magnesium compound which is the magnesium source to be used in the present invention, magnesium dihalides, dialkoxymagnesiums, alkoxymagnesium halides, magnesium oxyhalides, dialkylmagnesiums, magnesium oxide, magnesium hydroxide, carboxylates of magensium, etc. are exemplified. Among these magnesium compounds, magnesium dihalides, dialkoxymagnesiums and alkoxymagnesium halides, particularly $MgCl_2$, are preferred.

As the titanium compound which is the titanium source, compounds represented by the formula $Ti(OR^3)_{4-n}X_n$ (wherein $R^3$ is a hydrocarbyl group, preferably having about 1 to 10 carbon atoms, X represents a halogen atom and n is an integer of $0 \leqq n \leqq 4$) and polymers of a titanium tetraalkoxide. Specific examples may include:

titanium tetrahalides such as $TiCl_4$, $TiBr_4$ and the like;

alkoxytitanium halides such as

$Ti(OC_2H_5)Cl_3$,
$Ti(OC_2H_5)_2Cl_2$,
$Ti(OC_2H_5)_3Cl$,
$Ti(O\text{-}iC_3H_7)Cl_3$,
$Ti(O\text{-}nC_4H_9)Cl_3$,
$Ti(O\text{-}nC_4H_9)_2Cl_2$,
$Ti(OC_2H_5)Br_3$,
$Ti(OC_2H_5)(OC_4H_9)_2Cl$,
$Ti(O\text{-}nC_4H_9)_3Cl$,
$Ti(O\text{-}C_6H_5)Cl_3$,
$Ti(O\text{-}iC_4H_9)_2Cl_2$,
$Ti(OC_5H_{11})Cl_3$,
$Ti(OC_6H_{13})Cl_3$, and the like;
and titanium tetraalkoxides such as
$Ti(OC_2H_5)_4$,
$Ti(O\text{-}iC_3H_7)_4$,
$Ti(O\text{-}nC_3H_7)_4$,
$Ti(O\text{-}nC_4H_9)_4$,
$Ti(O\text{-}iC_4H_9)_4$,
$Ti(O\text{-}nC_5H_{11})_4$,
$Ti(O\text{-}nC_6H_{13})_4$,
$Ti(O\text{-}nC_7H_{15})_4$,
$Ti(O\text{-}nC_8H_{17})_4$,
$Ti[OCH_2CH(CH_3)_2]_4$,
$Ti[OCH_2CH(C_2H_5)C_4H_9]_4$, and the like.

Polymers of a titanium tetraalkoxide may include those represented by the following formula:

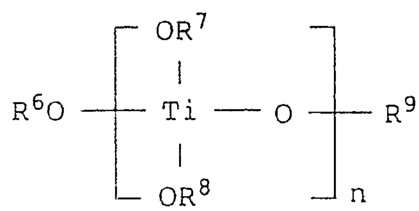

wherein, $R^6$ - $R^9$ represent the same or different hydrocarbyl groups, preferably aliphatic hydrocarbyl group having 1 to 10 carbon atoms or aromatic hydrocarbyl groups, particularly aliphatic hydrocarbyl groups having 2 to 6 carbon atoms. n represents a number of 2 or more, particularly a number up to 20. The value of n should be desirably selected so that the polytitanate itself or as a solution can be provided in a liquid state for the contact step with other components. A suitable n selected in view of ease of handling may be about 2 to 14, preferably 2 to 10. Specific examples of such polytitanates may include n-butylpolytitanate (n = 2 to 10), hexylpolytitanate (n = 2 to 10), n-octylpolytitanate (n = 2 to 10), and the like. Among them, n-butylpolytitanate is preferred.

It is also possible to use, as the titanium compound for the titanium source, a molecular compound obtained by reacting an electron donor as described below with a compound $TiX'_4$ (where $X'$ represents a halogen). Specific examples may include:
$TiCl_4 \cdot CH_3COC_2H_5$,
$TiCl_4 \cdot CH_3CO_2C_2H_5$,
$TiCl_4 \cdot C_6H_5NO_2$,
$TiCl_4 \cdot CH_3COCl$,
$TiCl_4 \cdot C_6H_5COCl$,
$TiCl_4 \cdot C_6H_5CO_2C_2H_5$,
$TiCl_4 \cdot ClCOC_2H_5$,
$TiCl_4 \cdot C_4H_4O$, and the like.

Among these titanium compounds,
$TiCl_4$, $Ti(OEt)_4$, $Ti(OBu)_4$, and $Ti(OBu)Cl_3$ are prefered. Particularly, $TiCl_4$ and $Ti(OBu)_4$ are prefered.

As to the halogen source, it is a common practice to supply the halogen from the halide compounds of magnesium and/or titanium as described above, but it can be also supplied from non halogenating agents

such as halogen compounds of aluminum, halogen compounds of silicon, halogen compounds of phosphorus, and the like.

The halogen contained in the catalyst components may be fluorine, chlorine, bromine, iodine or a mixture of these, particularly preferably chlorine.

The solid component to be used in the present invention can also include, in addition to the above essential components: a silicon compound such as $SiCl_4$, $CH_3SiCl_3$, and the like; a polymeric silicon compound having the structure represented by the following formula:

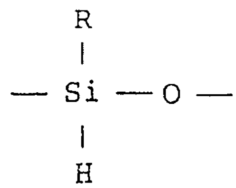

(wherein R is a hydrocarbyl group having about 1 to 10, particularly about 1 to 6 carbon atoms) and having a viscosity of about 1 centistoke to 100 centistokes, such as methylhydrogenpolysiloxane, ethylhydrogenpolysiloxane, phenylhydrogenpolysiloxane, cyclohexylhydrogenpolysiloxane, 1,1,3,3-tetramethyldisiloxane, 1,3,5,7-tetramethylcyclotetrasiloxane, 1,3,5,7,9-pentamethylcyclopentasiloxane and the like; an aluminum compound such as $Al(OiC_3H_7)_3$, $AlCl_3$, $AlBr_3$, $Al(OC_2H_5)_3$, $Al(OCH_3)_2Cl$;
a boron compound such as $B(OCH_3)_3$, $B(OC_2H_5)_3$, $B(OC_6H_5)_3$; $WCl_6$ and $MoCl_5$.

These optional compounds may remain in the solid component as the components of silicon, aluminum and boron.

Further, in preparing the solid component, use can also be made of an electron donor as what is called "an inside donor".

Examples of the electron donor or the inside donor which can be used for preparation of the solid component may include oxygen-containing electron donors such as alcohols, phenols, ketones, aldehydes, carboxylic acids, esters of an organic acid or an inorganic acid, ethers, acid amides, acid anhydrides, and the like; and nitrogen-containing electron donors such as ammonia, amines, nitriles, isocyanates, and the like.

More specifically, there may be included: (a) alcohols having 1 to 18 carbon atoms, such as methanol, ethanol, propanol, pentanol, hexanol, octanol, dodecanol, octadecyl alcohol, benzyl alcohol, phenylethyl alcohol, cumyl alcohol, isopropylbenzyl alcohol and the like; (b) phenols having 6 to 25 carbon atoms which may or may not have an alkyl group, such as phenol, cresol, xylenol, ethylphenol, propylphenol, cumylphenol, nonylphenol, naphthol and the like; (c) ketones having 3 to 15 carbon atoms, such as acetone, methyl ethyl ketone, methyl isobutyl ketone, acetophenone, benzophenone and the like; (d) aldehydes having 2 to 15 carbon atoms, such as acetaldehyde, propionaldehyde, octylaldehyde, benzaldehyde, tolualdehyde, naphthaldehyde and the like; (e) organic acid esters having 2 to 20 carbon atoms, such as methyl formate, methyl acetate, ethyl acetate, vinyl acetate, propyl acetate, octyl acetate, cyclohexyl acetate, ethyl propionate, methyl butyrate, ethyl valerate, ethyl stearate, methyl chloroacetate, ethyl dichloroacetate, methyl methacrylate, ethyl crotonate, ethyl cyclohexanecarboxylate, methyl benzoate, ethyl benzoate, propyl benzoate, butyl benzoate, octyl benzoate, cyclohexyl benzoate, phenyl benzoate, benzyl benzoate, methyl toluylate, ethyl toluylate, amyl toluylate, ethyl ethylbenzoate, methyl anisate, ethyl anisate, ethyl ethoxybenzoate, diethyl phthalate, dibutyl phthalate, diheptyl phthalate, $\gamma$-butyrolactone, $\alpha$-valerolactone, coumarine, phthalide, ethylene carbonate, cellosolve acetate, cellosolve isobutyrate and cellosolve benzoate, etc.; (f) inorganic acid esters, such as silicates such as ethyl silicate, butyl silicate, phenyltriethoxysilane, etc.; (g) acid halides having 2 to 15 carbon atoms, such as acetyl chloride, benzoyl chloride, toluyloic chloride, anisic chloride, phthaloyl chloride, phthaloyl isochloride and the like; (h) ethers having 2 to 20 carbon atoms, such as methyl ether, ethyl ether, isopropyl ether, butyl ether, amyl ether, tetrahydrofuran, anisole, diphenyl ether and the like; (i) acid amides, such as acetic amide, benzoic amide, toluyloic amide and the like; (j) amines, such as monomethylamine, monoethylamine, diethylamine, tributylamine, piperidine, tribenzylamine, aniline, pyridine, picoline, tetramethylethylenediamine and the like; and (k) nitriles, such as acetonitrile, benzonitrile, tolunitrile and the like. One or more of these electron donors can be used in preparing the solid catalyst component. Among them, preferred are organic acid esters and acid halides, particularly preferably phthalic acid esters, phthalic acid halides, and cellosolve acetate.

The amounts of the above respective components used may be at any desired level, so long as the

advantages inherent in the present invention can be attained, but, generally speaking, the following ranges are preferred.

The amount of the titanium compound used may be within the range of $1 \times 10^{-4}$ to 1000, preferably 0.01 to 10, in terms of molar ratio relative to the amount of the magnesium compound used. When a compound as the halogen source is used, its amount used may be within the range of $1 \times 10^{-2}$ to 1000, preferably 0.1 to 100, in terms of a molar ratio relative to magnesium used, irrespective of whether the titanium compound and/or the magnesium compound may contain a halogen or not.

The amount of the silicon, aluminum, boron, wolfram or molybdenum compound when used may be within the range of $1 \times 10^{-3}$ to 100, preferably 0.01 to 1, in terms of a molar ratio to the amount of the above magnesium compound used.

The amount of the electron donor compound when used may be within the range of $1 \times 10^{-3}$ to 10, preferably 0.01 to 5, in terms of a molar ratio relative to the amount of the above magnesium compound used.

The solid component for preparing the Sub-component (i) may be prepared from the titanium source, the magnesium source and the halogen source, and further optionally other components such as an electron donor according to methods mentioned below.

(a) A method in which a magnesium halide optionally together with an electron donor is contacted with a titanium compound.

(b) A method in which alumina or magnesia is treated with a phosphorus halide compound, and the product is contacted with a magnesium halide, an electron donor, a titanium halide-containing compound.

(c) A method in which the solid component obtained by contacting a magnesium halide with a titanium tetraalkoxide and a specific polymeric silicon compound is contacted with a titanium halide compound and/or a silicon halide compound.

As the polymeric silicon compound, those represented by the following formula are suitable:

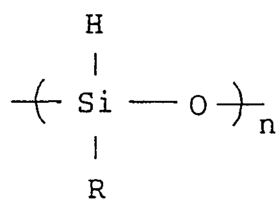

wherein R is a hydrocarbyl group having about 1 to 10 carbon atoms, n is a polymerization degree such that the viscosity of the polymeric silicon compound may be 1 to 100 centistokes.

Among them, methylhydrogenpolysiloxane, 1,3,5,7-tetramethylcyclotetrasiloxane, 1,3,5,7,9-pentamethylcyclopentacycloxane, ethylhydrogenpolysiloxane, phenylhydrogenpolysiloxane, and cyclohexylhydrogen polysiloxane are preferred.

(d) A method in which a magnesium compound is dissolved in a titanium tetraalkoxide and an electron donor, and the solid component precipitated from the solution upon addition thereto of a halogenating agent or a titanium halide compound is contacted with a titanium compound. Examples of halcgenating agents include silicon halides, aluminium halides, and halogen compounds of phosphorus.

(e) A method in which an organomagnesium compound such as Grignard reagent, etc. is reacted with a halogenating agent, a reducing agent, etc., and then the reaction product is contacted with an electron donor and a titanium compound.

(f) A method in which an alkoxymagnesium compound is contacted with a halogenating agent and/or a titanium compound in the presence or absence of an electron donor.

Among these methods, method (c), (d) and (g) are preferable.

Contact of the three components can be also effected in the presence of a dispersing medium. As the dispersing medium in that case, hydrocarbons, halogenated hydrocarbons, dialkylsiloxanes, etc. may be exemplified. Examples of hydrocarbons may include hexane, heptane, toluene, cyclohexane and the like; examples of halogenated hydrocarbons include n-butyl chloride, 1,2-dichloroethylene, carbon tetrachloride, chlorobenzene, etc.; and examples of dialkylpolysiloxane include dimethylpolysiloxane, methylphenylpolysiloxane and the like.

According to the above preferable embodiments for preparing the solid Sub-component (i) wherein two types of contacts are practiced, it is general that dissolution of the magnesium dihalide takes place at the former contact, and precipitation of the solid containing the magnesium dihalide takes place at the latter

contact. The precipitated solid should be desirably washed with a solvent compound as described above before use for the further step wherein it is contacted with the Sub-component (ii) and others.

The Sub-component (i) can be used as such as a solid catalyst component, but can be used after it has undergone what is called preliminary polymerization wherein it is contacted, optionally in the presence of an organoaluminum compound, with an α-olefin to produce on the solid catalyst component a small amount of a polymer of the α-olefin.

Reaction conditions of the preliminary polymerization, when such is practiced, are any suitable one, and are preferably as follows.

The polymerization temperature is 0 to 80 °C, preferably 10 to 60 °C. Quantity of a polymer produced at the preliminary polymerization is 0.001 to 50 g, preferably 0.1 to 10 g, per gram of the solid catalyst component.

The organoaluminum compounds, when such is used, are those conventionally used in Ziegler catalysts, and include, for example:

$Al(C_2H_5)_3$
$Al(iC_4H_9)_3$,
$Al(C_5H_{11})_3$,
$Al(n\text{-}C_6H_{13})_3$,
$Al(C_8H_{17})_3$,
$Al(C_{10}H_{21})_3$,
$Al(C_2H_5)_2Cl$,
$Al(iC_4H_9)_2Cl$,
$Al(C_2H_5)_2H$,
$Al(iC_4H_9)_2H$,
$Al(C_2H_5)_2(OC_2H_5)$,
methylaluminoxane, and
isobutylaluminoxane.

Preferable are $Al(C_2H_5)_3$ and $Al(iC_4H_9)_3$.

Combinations of a trialkylaluminum with an alkylaluminum halide, of a trialkylaluminum with an alkylaluminum halide and an alkylaluminum ethoxide are also effective, and include, for example:

$Al(C_2H_5)_3 + Al(C_2H_5)_2Cl$,
$Al(iC_4H_9)_3 + Al(iC_4H_9)Cl$,
$Al(C_2H_5)_3 + Al(C_2H_5)_{1.5}Cl_{1.5}$, and
$Al(C_2H_5)_3 + Al(C_2H_5)_2Cl + Al(C_2H_5)_2(OC_2H_5)$.

The quantity of an organoaluminum compound in the preliminary polymerization may be such that the molar ratio of Al/Ti in the Component (A) is 1 to 20, preferably 2 to 10. The preliminary polymerization can be practiced also in the presence of an electron donor such as an alcohol, an ester or a ketone which are described hereinbefore.

The α-olefins for the preliminary polymerization include, for example, ethylene, propylene, butene-1, hexene-1, 4-methyl-pentene-1, 3-methylbutene-1, 1,5-hexadiene, styrene and vinylcyclohexane. Hydrcgen gas can be used at the preliminary polymerization.

Sub-component (ii)

Sub-component (ii) for preparing the Component (A) is a silicon compound expressed by a formula

$R^1_mX_nSi(OR^2)_{4-m-n}$

wherein $R^1$ is a hydrocarbyl group, $R^2$ is a hydrocarbyl group which is the same as or different from $R^1$, X is a halogen atom, and m and n are each numbers satisfying equations $0 \leqq m \leqq 3$, $0 \leqq n \leqq 3$ and $0 \leqq (m+n) \leqq 3$.

$R^1$ and $R^2$ may have 1 to 20, preferably 1 to 10, carbon atoms and may be in a branched or straight configuration, respectively.

X is preferably a chlorine atom at least from an economical point of view.

$R^1$ may have 1 to 20, preferably 3 to 20, more preferably 4 to 10 carbon atoms.

$R^2$ may be an aliphatic hydrocarbyl group, and preferably is a linear aliphatic hydrocarbyl group of 1 to 4 carbon atoms.

Specific examples of the silicon compounds may include:

$(CH_3)Si(OCH_3)_3$,
$(CH_3)Si(OC_2H_5)_3$,

$(C_2H_5)_2Si(OCH_3)_2$,
$(i\text{-}C_3H_7)_2Si(OCH_3)_2$,
$(n\text{-}C_6H_{13})Si(OCH_3)_3$,
$(C_2H_5)Si(OC_2H_5)_3$,
$(n\text{-}C_{10}H_{21})Si(OC_2H_5)_3$,
$(CH_2=CH)Si(OCH_3)_3$,
$Cl(CH_2)_3Si(OCH_3)_3$,
$Si(OCH_3)_4$,
$Si(OC_2H_5)_3Cl$,
$(C_2H_5)_2Si(OC_2H_5)_2$,
$(C_{17}H_{35})Si(OCH_3)_3$,
$Si(OC_2H_5)_4$,
$(C_6H_5)Si(OCH_3)_3$,
$Si(OCH_3)_2Cl_2$,
$(C_6H_5)_2Si(OCH_3)_2$,
$(C_6H_5)(CH_3)Si(OCH_3)_2$,
$(C_6H_5)Si(OC_2H_5)_3$,
$(C_6H_5)_2Si(OC_2H_5)_2$,
$NC(CH_2)_2Si(OC_2H_5)_3$,
$(C_6H_5)(CH_3)Si(OC_2H_5)_2$,
$(n\text{-}C_3H_7)Si(OC_2H_5)_3$,
$(CH_3)Si(OC_3H_7)_3$,
$(C_6H_5)(CH_2)Si(OC_2H_5)_3$,

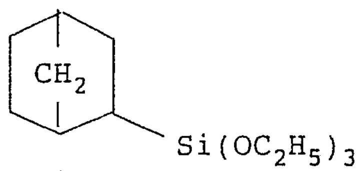 ,

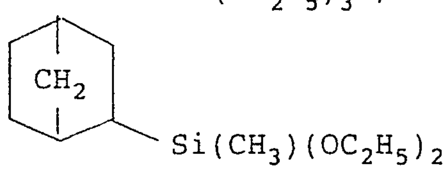 ,

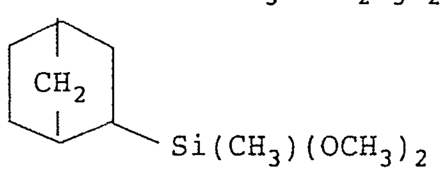 ,

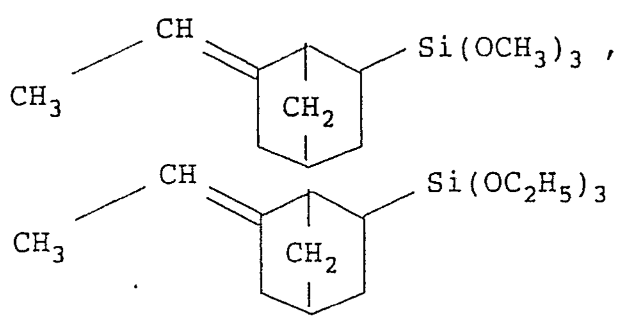 ,

,

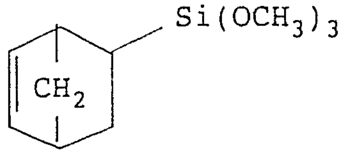 ,

$(CH_3)_3CSi(CH_3)(OCH_3)_2$,
$(CH_3)_3CSi(HC(CH_3)_2)(OCH_3)_2$,
$(CH_3)_3CSi(CH_3)(OC_2H_5)_2$,
$C_2H_5)_3CSi(CH_3)(OCH_3)_2$,
$(CH_3)(C_2H_5)CH\Sigma i(CH_3)(OCH_3)_2$,
$((CH_3)_2CHCH_2)_2Si(OCH_3)_2$,
$(C_2H_5)(CH_3)_2CSi(CH_3)(OCH_3)_2$,
$(C_2H_5)(CH_3)_2CSi(CH_3)(OC_2H_5)_2$,
$(CH_3)_3CSi(OCH_3)_3$,
$(CH_3)_3CSi(OC_2H_5)_3$,
$(C_2H_5)_3CSi(OC_2H_5)_3$,
$(CH_3)(C_2H_5)CHSi(OCH_3)_3$,
$(C_2H_5)(CH_3)_2CSi(OCH_3)_3$,
$(C_2H_5)(CH_3)_2CSi(OC_2H_5)_3$,
$(C_2H_5)_3CSi(OC_2H_5)_3$,
$(CH_3)(C_2H_5)CHSi(OCH_3)_3$,
$((CH_3)_3C)_2Si(OCH_3)_2$.

It is preferable that $R^1$ has a branch at the carbon atom adjacent to the silicon atom. The branch may preferably be an alkyl group, cycloalkyl group or aryl group such as phenyl or methyl-substituted phenyl group. More preferably, the carbon atom adjacent to the silicon atom, namely α-carbon atom, is a secondary or tertiary carbon atom in a branched hydrocarbyl group having 3 to 20 carbon atoms. Most preferably, the carbon atom connected with the silicon atom is a tertiary carbon atom in a branched hydrocarbyl group having 4 to 10, carbon atoms.

Sub-component (iii)

Sub-component (iii) for preparing a solid catalyst component in accordance with the present invention is an organometal compound of a metal of the Group I to III of the Periodic Table.

Examples of the metals include lithium, magnesium, aluminum and zinc, but aluminum is representable.

The compounds are organometal compounds and thus have at least one organic radical-metal bonding. The organic radical may typically be a hydrocarbyl group of 1 to 10 carbon atoms, preferably 1 to 6 carbon atoms.

The remaining valence of the metal in question other than those satisfied by an organic radical, if any, can be satisfied by a hydrogen atom, a halogen atom, hydrocarbyloxy group of 1 to 10, preferably 1 to 6, carbon atoms, or the metal itself with an oxygen bridge such as

$$-O-\underset{\displaystyle CH_3}{\underset{|}{Al}}-$$

when the compounds are methylalminoxanes.

Specific examples of such organometal compounds may include: (a) organolithium compounds, e.g. methyllithium, n-butyllithium, sec.-butyllithium, tert.-butyllithium and the like; (b) organomagnesium compounds, e.g. diethylmagnesium, ethylbutylmagnesium, dibutylmagnesium, dihexylmagnesium, hexylethylmagnesium, ethylmagnesium chloride, ethylmagnesium bromide, butylmagnesium chloride, tert.-butylmagnesium bromide, and the like; (c) organozinc compounds, e.g. diethylzinc, dimethylzinc, dibutylzinc, and the like; (d) organoaluminum compounds, e.g. trimethylaluminum, triethylaluminum, triisobutylaluminum, tri-n-hexylaluminum, diethylaluminum chloride, diethylaluminum hydride, diethylaluminum ethoxide, ethylaluminum sesquichloride, ethylaluminum dichloride, methylaluminoxane, and the like. Among these, organoaluminum compounds are preferable. Further examples of organoaluminum compounds may be found in the examples of organoaluminum compounds as the Component (B) which will be given hereinbelow.

Exemplification of organoaluminum compounds as the Sub-component (iii) may be found in the exemplification of organoaluminum compounds for use in the preliminary polymerization or as the component (B).

Examples include:
$Al(C_2H_5)_3$,
$Al(iC_4H_9)_3$,
$Al(nC_4H_9)_3$,
$Al(C_5H_{11})_3$,
$Al(nC_6H_{13})_3$,
$Al(C_8H_{17})_3$,
$Al(C_{10}H_{21})_3$,
$Al(C_2H_5)_2Cl$,
$Al(iC_4H_9)_2Cl$,
$Al(C_2H_5)_2H$,
$Al(iC_4H_9)_2$-
$Al(C_2H_5)_2(OC_2H_5)$.

## Preparation of the Component (A)

The contacting conditions can be as desired, so long as the advantages inherent in the present invention can be attained, but generally the following conditions are preferred. The contact temperature may be about -50 to 200° C, preferably 0 to 100° C. As the contacting method, there may be employed the mechanical method wherein a rotating ball mill, a vibrating ball mill, a jet mill, a medium stirring pulverizer or the like is used and the method in which contact is effected with stirring under the presence of an inert diluent. As the inert diluent to be used, aliphatic or aromatic hydrocarbons and halohydrocarbons, polysiloxane, etc. may be exemplified.

The contacting order and the contacting time of the Sub-components (i) to (iii) in preparing the component (A) of the present invention may be any desired one, so long as the advantages inherent in the present invention are attained.

Specific orders of such contact may include those as shown below, where the symbol "+" indicates a contact between the components flanking the symbol, and a washing or rinsing processing can be interposed between the contacts.

(a) {Sub-component (i) + Sub-component (ii)} + Sub-component (iii);
(b) {Sub-component (i) + Sub-component (iii)} + Sub-component (ii);
(c) Sub-component (i) + {Sub-component (ii) + {Sub-component (iii)} + {Sub-component (ii) + Sub-component (iii);
(d) {Sub-component (ii) + Sub-component (iii)} + Sub-component (i);
(e) Sub-component (i) + Sub-component (ii) + Sub-component (iii).

The quantitative ratio of the Sub-components (i) to (iii) can be any desired one, so long as the advantages inherent in the present invention can be attained, but generally preferred to be within the following ranges.

The quantitative ratio of the Sub-component (i) to (ii) may be within the range of 0.01 to 1000, preferably 0.1 to 100, in terms of the atomic ratio (silicon/titanium) of the silicon of the Sub-component (ii) to the titanium component constituting the Sub-component (i).

The Sub-component (iii) is used in an amount within the range of 0.01 to 100, preferably 0.1 to 30, in terms of the atomic ratio of the metals {(Sub-component (iii)/titanium(Sub-component (i)}.

Modification of the Component (A) can be applied provided that the advantages inherent in the present invention may not be impaired.

One of the modification comprises use of another component other than Sub-omponents (i) to (iii) during the process for preparing Component (A), such as methylhydrogenpolysiloxane, ethyl borate, aluminum triisopropoxide, aluminum trichloride, silicon tetrachloride, a tetra-valent titanium compound of a formula: $Ti(OR)_{4-n}X_n$ where R is a hydrocarbyl group preferably of 1 to 6 carbon atoms, X is a halogen atom, and n is $0 \leqq n \leqq 4$, a tri-valent titanium compound, wolfram hexachloride, molybdenum pentachloride and the like.

## Component (B)

The component (B) is an aluminoxane.

Any aluminoxanes known in the art may be used.

Preferred examples of aluminoxanes include:

(i) cyclic aluminoxanes of a formula

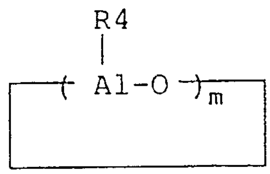

where $R^4$ is a hydrocarbyl group of 1 to 8 carbon atoms, preferably 1 to 4 carbon atoms, and m is a number of 2 to 100, preferably 4 to 40, and

(ii) lnear aluminoxanes of a formula

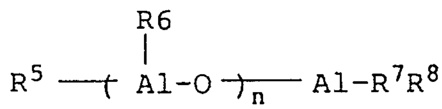

where $R^5$, $R^6$, $R^7$ and $R^8$ are each a hydrocarbyl group of 1 to 8 carbon atoms, preferably 1 to 4 carbon atoms, and n is a number of 2 to 100, preferably 4 to 40.

These aluminoxanes are prepared by any suitable methods including, for example:

(a) a method wherein a trialkylaluminum is reacted with free water in a suitable organic solvent such as, e.g. toluene, benzene and ether;

(b) a method wherein a trialkylaluminum is reacted with water of crystallization of a hydrated salt such as, e.g. copper sulfate hydrate and aluminum sulfate; and

(c) a method wherein a trialkylaluminum is reacted with water adsorbed in silica gel or the like.

The products of these methods may be mixtures of the cyclic and the linear aluminoxanes, and no necessity is usually found for separating the cyclic structure from the linear structure for use in the present process.

Making up of a catalyst

The catalysts in accordance with the present invention may be made up by contacting Components (A) and (B) or (A), (B) and an optional component each other at once, or step-wisely or portion-wisely, within or outside a polymerization vessel in the absence or presence of an α-olefin to be polymerized.

The amount of the Component (B) used may be 0.1 to 1000, preferably 1 to 100, in terms of mole ratio of Al/Ti of the Component (B)/Component (A).

The Components (A) and (B) can be introduced to the place where they are contacted in any suitable way, but it may be preferred to bring it into contact each in a dispersion in an aliphatic hydrocarbon such as hexane or heptane before or after they are introduced into a polymerization vessel.

## [II] Polymerization of olefins

The polymerization of olefins in accordance with the present invention is characterized by, inter alia , the temperature used, which is 150 ° C or higher.

The upper limit of the polymerization temperature may be around 300 ° C. The preferable temperature range may be 150 to 250 ° C.

Not only are the catalysts of the present invention applicable to ordinary slurry polymerization but they may also be used for liquid-phase, solventless polymerization wherein substantially no solvent is used, solution polymerization and vapor-phase polymerization, in a continuous or a batch-wise fashion. The catalysts in accordance with the present invention can be used not only in continuous polymerization and batchwise polymerization but also in the polymerization wherein a preliminary polymerization is conducted

in which a small amount of an α-olefin is polymerized by the catalyst. In the case of slurry polymerization, aliphatic or aromatic hydrocarbons such as hexane, heptane, pentane, cyclohexane, benzene, toluene and kerosene are used alone or in combination as the polymerization solvent. The polymerization may be practiced under any pressure, preferably under a pressure of atmospheric to 1000 kg/cm$^2$, preferably atmospheric to 150 kg/cm$^2$, and hydrogen can be used additionally as the molecular-weight regulator.

The olefins to be polymerized with the catalyst systems of the present invention are represented by the general formula:

$R\text{-}CH=CH_2$

wherein R is a hydrocarbyl residue which has 1 to 10 carbon atoms and may contain a branched group.

Specific examples of such olefins may include propylene, butene-1, pentene-1, hexene-1, 3-methylbutene-1 and 1,4-methylpentene. Preference is given to propylene, 3-methylbutene-1 and 4-methyl pentene-1, propylene being more preferable. In polymerization, ethylene can be copolymerized with the aforesaid olefin in an amount of up to 50 weight %, preferably up to 20 weight % based on the olefin such as propylene. The polyolefins produced in accordance with the present invention have a broader molecular weight range as referred to hereinbefore.

## [EXPERIMENTAL EXAMPLES]

### Example-1

[Preparation of Compoennt (A))

Into a flask purged with nitrogen was introduced 200 ml of dehydrated and deoxygenated n-heptane, and subsequently 0.4 mol of $MgCl_2$ and 0.8 mol of $Ti(O\text{-}nC_4H_9)_4$ and the reaction was carried at 95° C for 2 hours. After completion of the reaction, the temperature was lowered to 40° C, followed by addition of 48 ml of methylhydrogenpolysiloxane (of 20 centistokes) and the reaction was carried out for 3 hours. The solid component formed was washed with n-heptane.

Subsequently into a flask purged with nitrogen was introduced 50 ml of n-heptane purified similarly as described above, and the solid component synthesized above was introduced in an amount of 0.24 mol as calculated on Mg atom. Then, a mixture of 25 ml of n-heptane with 0.8 mol of $SiCl_4$ was introduced into the flask at 30° C over 30 minutes, and the reaction was carried out at 90° C for 1 hour. After completion of the reaction, the product was washed with n-heptane.

Into a flask purged with nitrogen was introduced 50 ml of amply purified n-heptane, and then 5 g of the solid component obtained above, Sub-component (i), was introduced. Next, 2.8 ml of $(CH_3)_3CSi(CH_3)(OCH_3)_2$ as the silicon compound of the Sub-component (ii), and 1.5 g of triethylaluminum of the Sub-component (iii) were respectively introduced and contacted at 30° C for 2 hours. After completion of the contact, the product was amply washed with n-heptane to provide a Component (A).

[Polymerization of propylene]

Into a polymerization vessel with a stirring and a temperature control means of 1.5 liter capacity were introduced 500 ml of amply dehydrated and deoxygenated n-paraffin, 50 mg of methylaluminoxane of the Component (B) and 100 mg of the above synthesized Component (A). Polymerization of propylene was conducted at a temperature of 170° C and under a pressure of 5 Kg/cm$^2$G for 2 hours, after which the polymer solution obtained was subjected to treatment with methanol to separate the polymer from the n-paraffin and the polymer obtained was dried.

A polymer in a yield of 54.2 g was obtained.

The polymer had an MFR of 5.2 g/10 min., and the content of the fraction soluble in xylene at 20° C, which is hereinbelow referred to as CXS, was 1.31% by weight.

Analysis by NMR showed that the polymer structure was such that the meso-meso configuration was 95.3% in the total triad sequence and the meso-meso-meso-meso configuration was 91.2% in the total pentad sequence.

Example-2

[Preparation of Compoennt (A))

Into a flask purged with nitrogen was introduced 200 ml of dehydrated and deoxygenated n-heptane, and subsequently 0.4 mol of $MgCl_2$ and 0.8 mol of $Ti(O\text{-}nC_4H_9)_4$ and the reaction was carried at 95°C for 2 hours. After completion of the reaction, the temperature was lowered to 40°C, followed by addition of 48 ml of methylhydrogenpolysiloxane (of 20 centistokes) and the reaction was carried out for 3 hours. The solid component formed was washed with n-heptane.

Subsequently into a flask purged with nitrogen was introduced 50 ml of n-heptane purified similarly as described above, and the solid component synthesized above was introduced in an amount of 0.24 mol as calculated on Mg atom. Then, a mixture of 25 ml of n-heptane with 0.4 mol of $SiCl_4$ was introduced into the flask at 30°C over 30 minutes, and the reaction was carried out at 70°C for 3 hours. After completion of the reaction, the product was washed with n-heptane.

Then, 0.024 mole of phthaloyl chloride in 25 ml of n-heptane was introduced into the flask at 70°C for 30 minutes and the reaction was conducted at 90°C for 1 hour. The product was then washed with n-heptane. 20 ml of $SiCl_4$ was then introduced and reacted at 80°C for 6 hours, after which the product was washed with n-heptane. The solid product produced was found to contain 1.21% of titanium.

Into a flask purged with nitrogen was introduced 50 ml of amply purified n-heptane, and then 5 g of the solid component obtained above, Sub-component (i), was introduced. Next, 2.4 ml of $(CH_3)_3CSi(CH_3)(OCH_3)_2$ as the silicon compound of the Sub-component (ii), and 1.0 g of triethylaluminum of the Sub-component (iii) were respectively introduced and contacted at 30°C for 2 hours. After completion of the contact, the product was amply washed with n-heptane to provide a component (A).

[Polymerization of propylene]

Into a polymerization vessel with a stirring and a temperature control means of 1.5 liter capacity were introduced 500 ml of amply dehydrated and deoxygenated n-paraffin, 35 mg of methylaluminoxane of the Component (B) and 100 mg of the above synthesized Component (A). Polymerization of propylene was conducted at a temperature of 170°C and under a pressure of 5 $Kg/cm^2G$ for 2 hours, after which the polymer solution obtained was subjected to treatment with methanol to separate the polymer from the n-paraffin and the polymer obtained was dried.

A polymer in a yield of 79.4 g was obtained.

The polymer had an MFR of 15.2 g/10 min., and the CXS was 0.91% by weight.

Analysis by NMR showed that the polymer structure was such that the meso-meso configuration was 97.3% and the meso-meso-meso-meso configuration was 93.6%.

Example-3

Polymerization of propylene was conducted as in Example-2 except for the polymerization which was changed to 160°C and the methylaluminoxane which was changed to isobutylaluminoxane. The polymer obtained was in an amount of 54.5 g and had the CXS of 1.21% by weight.

Example-4

Polymerization of propylene was conducted as in Example-1 except for the polymerization temperature which was changed to 190°C and the methylaluminoxane which was changed to 15 mg of methylaluminoxane. The polymer obtained was in an amount of 36.4 g and had the CXS of 1.05% by weight.

Comparative Example

Polymerization of propylene was conducted as in Example-1 except for the use of triethylaluminum in place of methylaluminoxane. Only 1.1 g of a polymer was obtained.

Example-5

The procedure set forth in Example-1 for preparing component (A) was followed except for the use as Sub-component (ii) of 3.6 ml of $(C_6H_5)Si(OC_2H_5)_3$ in place of $(CH_3)_3CSi(CH_3)(OCH_3)_2$.

The procedure set forth in Example-1 for polymerizing propylene was followed except for the temperature changed to 150 °C.

A polymer was obtained in a quantity of 34.5g, which had MFR of 25.6 g/10min. and CXS of 1.44% by weight.

Example-6

The procedure set forth in Example-1 for preparing Component (A) was followed except for the use as Sub-component (iii) of 2.2 g of triisobutylaluminum in place of $Al(C_2H_5)_3$.

The procedure set forth in Example-1 for polymerizing propylene was followed.

A polymer was obtained in a quantity of 76.6 g, which had MFR of 8.1 g/10min. and CXS of 1.33% by weight.

Example-7

Component (A) prepared in Example-2 was used for copolymerizing ethylene with propylene.

Polymerization was conducted where a gaseous monomer mixture containing 2 mole % of ethylene was subjected to polymerization under the conditions set forth in Example-1 except for the temperature changed to 150 °C.

A polymer was obtained in a quantity of 96.6 g, which had MFR of 21.1 g/10 min., CXS of 1.02 % by weight and an ethylene content in the polymer of 1.9 mole %.

## Claims

1. A process for producing α-olefin polymers which comprises contacting at a temperature of 150 °C to 300 °C an α-olefin with a catalyst thereby to polymerize the olefin, the catalyst comprising:

Component (A) which is a solid catalyst component for Ziegler catalysts, which solid catalyst component is obtained by contacting the following Sub-components (i) to (iii):

Sub-component (i) which is a solid catalyst component for Ziegler catalysts comprising titanium, magnesium and a halogen as the essential components;

Sub-component (ii) which is a silicon compound represented by a formula

$R^1_mX_nSi(OR^2)_{4-m-n}$

wherein $R^1$ indicates a hydrocarbyl group, $R^2$ which may be the same as or different from $R^1$ indicates a hydrocarbyl group, X indicates a halogen atom, and m and n are each numbers satisfying equations $0 \leq m \leq 3$, $0 \leq n \leq 3$ and $0 \leq (m+n) \leq 3$; and

Sub-component (iii) which is an organometal compound of a metal of the Groups I to III of the Periodic Table; and

Component (B) which is an aluminoxane.

2. The process as claimed in claim 1, wherein the polymerization temperature is within the range of 150 to 250 °C.

3. The process as claimed in claim 1 or 2, wherein the aluminoxane is selected from the group consisting of:

(i) cyclic aluminoxanes of a formula

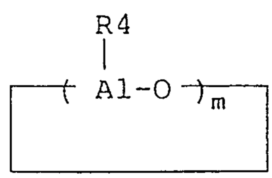

where $R^4$ is a hydrocarbyl group of 1 to 8 carbon atoms, and m is a number of 2 to 100; and

(ii) linear aluminoxanes of a formula

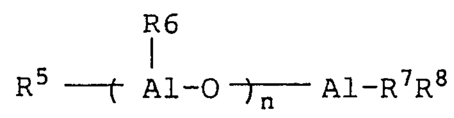

where $R^5$, $R^6$, $R^7$ and $R^8$ are each a hydrocarbyl group of 1 to 8 carbon atoms, and n is a number of 2 to 100.

4. The process as claimed in claim 3, wherein the aluminoxane is an admixture of the cyclic aluminoxane and the linear aluminoxane.

5. The process as claimed in claim 4, wherein the aluminoxane in admixture is such that $R^4$, $R^5$, $R^6$, $R^7$ and $R^8$ are each a hydrocarbyl group of 1 to 4 carbon atoms, and m and n are each 4 to 40.

6. The process as claimed in any one of preceding claims, wherein the component (i) is a product prepared by a method selected from the group of:

(i) a method in which the solid component obtained by contacting a magnesium halide with a titanium tetraalkoxide and a polymeric silicon compound is contacted with a titanium halide compound and/or a silicon halide compound, the polymeric silicon compound represented by the formula

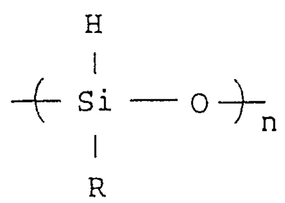

wherein R is a hydrocarbyl group having about 1 to 10 carbon atoms, n is a polymerization degree such that the viscosity of the polymeric silicon compound may be 1 to 100 centistokes;

(ii) a method in which a magnesium compound is dissolved in a titanium tetraalkoxide and an electron donor, and the solid component precipitated from the solution upon addition thereto of a halogenating agent or a titanium halide compound is contacted with a titanium compound; and

(iii) a method in which a magnesium dihalide and a titanium tetraalkoxide and/or a polymer thereof are contacted, and subsequently with the polymeric silicon compound.

7. The process as claimed in claim 6, wherein the halogenating agent is selected from the group of silicon halides, aluminium halides and halogen compounds of phosphorus.

8. The process as claimed in any one of the preceding claims, wherein the silicon compound of the Sub-component (ii) is such that the $R^1$ is a branched chain hydrocarbyl group of 3 to 20 carbon atoms whose $\alpha$-carbon is secondary or tertiary.

9. The process as claimed in any one of the preceding claims, wherein the Sub-component (iii) is an organoaluminum compound.

10. The process as claimed in any one of the preceding claims, wherein the proportions of the Sub-components (i), (ii) and (iii) are:

the Si/Ti atomic ratio of Sub-component (ii)/Sub-component (i) being 0.01 to 1000;

the metal of Group I-III/Ti atomic ratio of Sub-component (iii)/Sub-component (i) being 0.01 to 100.

11. The process as claimed in any one of the preceding claims, wherein the Component (A) has undergone contact with an $\alpha$-olefin thereby to polymerize the olefin in an amount of 0.01 to 100 times the weight of the Component (A).